# EUROPEAN PATENT APPLICATION

(11) **EP 2 284 728 A1**
(43) Date of publication of application: **16.02.2011**
(21) Application number: 10170855.0
(22) Date of filing: 27.07.2010
(51) Int. Cl.: G06F 17/30, G06F 3/048

(54) **Web browsing method and web browsing device**

(30) Priority: 27.07.2009 KR 20090068414
(71) Applicant: Samsung Electronics Co., Ltd., Suwon-si, Gyeonggi-do (KR)
(72) Inventor: Lee, Hyun-chul, Gyeonggi-do (KR)
(74) Representative: Jenkins, Richard Gavin

(57) **Abstract**

A web browsing device employing a touch input method and a web browsing method used in the web browsing device are provided. The web-browsing method includes: receiving a panning input on a screen on which a first web page is being displayed; and displaying on the screen a second web page according to a type of the received panning input.

## Description

### CROSS-REFERENCE TO RELATED PATENT APPLICATION

This application claims priority from Korean Patent Application No. 10-2009-0068414, filed on July 27, 2009, in the Korean Intellectual Property Office, the disclosure of which is incorporated herein in its entirety by reference.

### BACKGROUND

### 1. Field

Methods and apparatuses consistent with exemplary embodiments relate to web browsing, and more particularly, to a web browsing device employing a touch input method and a web browsing method used in the web browsing device.

### 2. Description of the Related Art

The number of people who access the Internet with mobile devices, for example, mobile phones, smart phones and personal digital assistants, including a small screen and a touch input device is rapidly increasing. Such mobile devices can web-browse from any location, and can be also used in a mobile manner. However, it can be difficult to operate these devices due to their small screen. Further, both a web page and function menus for web browsing have to be displayed on the same screen, and thus the size of the screen on which the web page is displayed is reduced. Although semitransparent function menus may be displayed overlapping the web page, the readability of web content is reduced.

### SUMMARY

Exemplary embodiments provide a web browsing method and a web browsing device for providing functions of accessing a web browsing history without a special menu or of moving among a plurality of web pages or tabs in a touch input device.

According to an aspect of an exemplary embodiment, there is provided a web browsing method in a device employing a touch input method, the web browsing method including: receiving a panning input on a screen on which a first web page is being displayed; and displaying a second web page determined according to the type of the received panning input on the screen.

The displaying of the second web page may include, when the panning input is a left-right panning, displaying a previous web page or a next web page of the first web page in a browsing history.

The displaying of the second web page may include, when the panning input is an up-down panning, displaying a window including the second web page, instead of a window including the first web page, on the screen.

The displaying of the window including the second web page may include: when the window including the first web page is a first generated window and when the panning input is an upward panning, displaying a finally generated window; and when the window including the first web page is a finally generated window and when the panning input is a downward panning, displaying the first generated window.

The displaying of the second web page may include, when the panning input is an up-down panning, displaying a tab including the second web page instead of a tab including the first web page.

The displaying of the tab including the second web page may includes: when a tab including the first web page is a first generated tab and when the panning input is an upward panning, displaying a finally generated tab; and when a tab including the first web page is a finally generated tab and when the panning input is a downward panning, displaying a first generated tab.

The displaying of the second web page may include: when the panning input is a left-right panning, displaying the second web page that was displayed on the current window or in the current tab at a different time from the first web page; and when the panning input is an up-down panning, displaying the second web page comprised in a different window or tab from the first web page.

The displaying of the second web page may include, when web browsing is performed in a zoom-in mode, displaying the second web page when the window is moved up to an end part of the first web page by the panning input and an additional panning input is received in a direction of the end part of the first web page.

The displaying of the second web page further may include, when web browsing is performed in a zoom-in mode and a flick input is received, determining the second web page according to the type of the flick input and displaying the second web page.

According to an aspect of another exemplary embodiment, there is provided a computer-readable recording medium having embodied thereon a program for executing a web browsing method in a device employing a touch input method, the web browsing method may include: receiving a panning input on a screen on which a first web page is displayed; and displaying a second web page determined according to the type of the received panning input on the screen.

According to an aspect of another exemplary embodiment, there is provided a web browsing device employing a touch input method, the device including a controlling unit for displaying a second web page determined according to the type of a panning input received on a screen on which a first web page is displayed.

### BRIEF DESCRIPTION OF THE DRAWINGS

The above and/or other aspects will become more apparent by describing in detail exemplary embodiments thereof with reference to the attached drawings in which:

FIG. 1 is a block diagram illustrating a structure of a web browsing device according to an exemplary embodiment;

FIG. 2 is a flowchart of a web browsing method according to another exemplary embodiment;

FIGS. 3A through 3C are views illustrating screens displaying web browsing operations according to an exemplary embodiment;

FIGS. 4A through 4C are views illustrating screens displaying web browsing operations according to another exemplary embodiment;

FIGS. 5A through 5D are views illustrating screens displaying web browsing operations according to another exemplary embodiment;

FIGS. 6A and 6B are views illustrating a web browsing operation according to another exemplary embodiment;

FIGS. 7A and 7B are views illustrating a web browsing operation according to another exemplary embodiment; and

FIGS. 8A through 8C are views illustrating a web browsing operation according to another exemplary embodiment.

### DETAILED DESCRIPTION OF EXEMPLARY EMBODIMENTS

Exemplary embodiments will be described in detail with reference to the accompanying drawings.

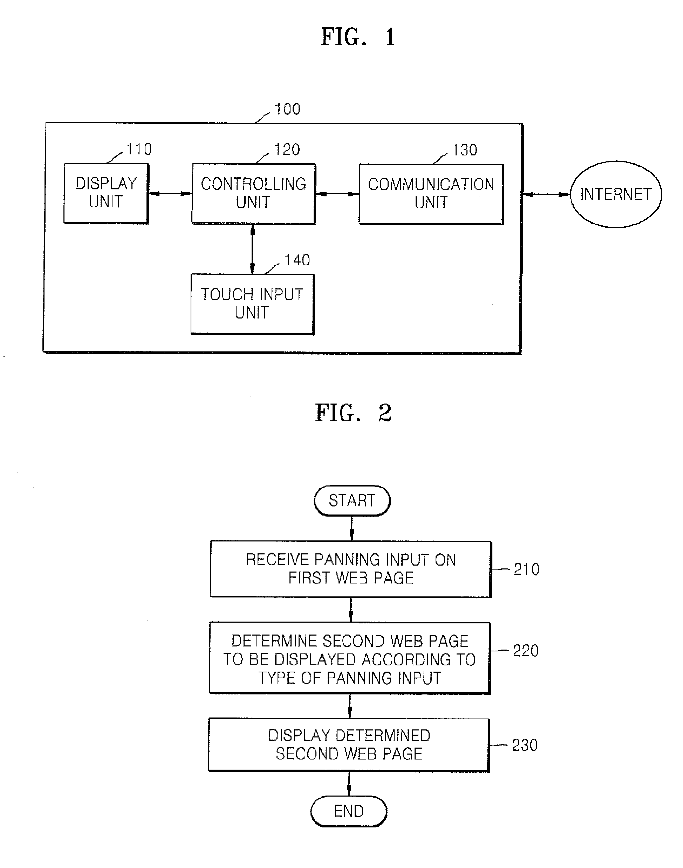

FIG. 1 is a block diagram illustrating a structure of a web browsing device 100 according to an exemplary embodiment.

The web browsing device 100 includes a controlling unit 120 including a processor (not shown) and controlling the entire device, a communication unit 130 for accessing the Internet via wireless or wired communication, a display unit 110 including a screen that displays a web browser executed by the controlling unit 120 and a web page received via the Internet through the communication unit 130, and a touch input unit 140 employing a touch input method. Also, the web browsing device 100 may include a memory (not shown) for storing an operating system of the web browsing device 100, application programs such as a web browser, and information required to control the web browsing device 100.

A user may input web-browsing commands through the touch input unit 140 connected to the display unit 110. For example, the display unit 110 and touch input unit 140 may form a touch screen that can detect the presence and location of a touch within the display area. When a panning input on a screen on which a first web page is displayed is received from a user through the touch input unit 140, the controlling unit 120 determines a type of the received panning input, determines a second web page according to the determined type of the receive panning input, and displays the second web page instead of the first web page or moves to the second web page. In other words, the controlling unit 120 determines that the user's panning input corresponds to a particular type of a web-browsing command and performs a web browsing operation corresponding to the web-browsing command. Panning is a touch input where a user drags a finger or a touch input device across the screen like when drawing a line, or alternatively, different types of touch input gestures, such as a flick, may be used. The flick is a touch input gesture that a user briefly touches the screen in a predetermined direction. The panning input may be defined for a process in which a web page is slowly transitioned to another web page, whereas the flick input may be defined for a process in which a web page is directly changed to another web page, that is, a web page is replaced with another web page page-by-page.

Herein, panning performed rightwards or leftwards is referred to as a left-right panning, and panning performed upwards or downwards is referred to as an up-down panning. Alternatively, panning performed in another direction may be designated to correspond to another web-browsing command. The controlling unit 120 may control other components of the web browsing device 100 to display the second web page that has been displayed in the current window or tab at a time different from the first web page when the panning input is the left-right panning, and to display the second web page included in a window or tab different from the first web page when the panning input is the up-down panning. Operations of the controlling unit 120 will now be described below.

FIG. 2 is a flowchart of a web browsing method according to another exemplary embodiment.

When a user, who desires to web browse from a first web page currently displayed on a touch screen to a second web page, performs a panning operation leftwards, rightwards, upwards, or downwards on the touch screen, a panning input is received through a touch input unit 140 (Operation 210).

According to the type of the panning input, that is, according to the panning direction, a type of web-browsing command to be performed is determined, and the second web page to be displayed according to the determined type of web-browsing command (Operation 220). The determined second web page may be a web page in which a user has visited before or after the first web page in a web browsing history, or may be a web page displayed on another web browser window or tab that has been generated as a result of the user's web surfing. That is, web-browsing commands, such as "back", "next", "previous window", "next window", "previous tab", or "next tab", may correspond to different types panning inputs. However, exemplary embodiments are not limited thereto, and one of ordinary skill in the art will readily understand that another web-browsing command may correspond to another predetermined panning input. The determined second web page is displayed on a screen (Operation 230). The second web page may be stored or cached in a memory of the web browsing device 100 or may be received from a web server. However, the method of obtaining the second web page is not limited to a particular method.

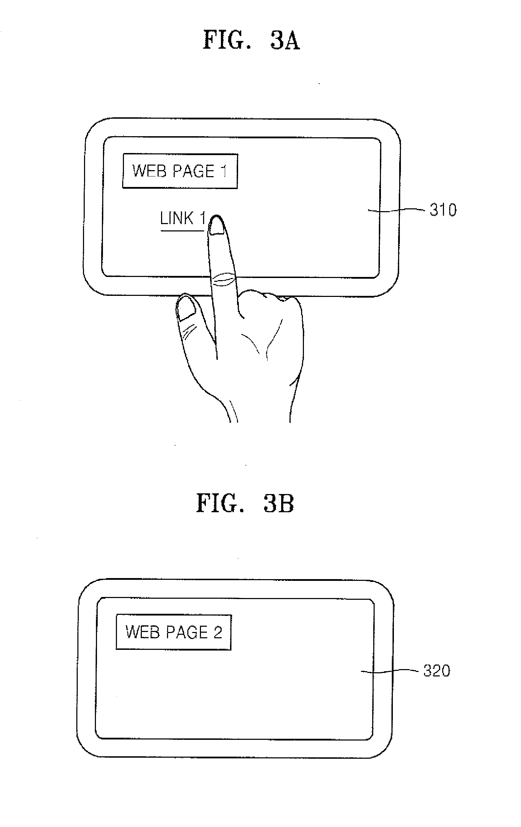

FIGS. 3A through 3C are views illustrating screens displaying web browsing operations for accessing a web browsing history through a left-right panning, according to an exemplary embodiment.

Referring to FIG. 3A, while web browsing, a user selects a "link 1" in a web page 1 310 that is currently displayed on a screen. FIG. 3B shows a web page 2 320 displayed on the screen as a result of the user's selection of link 1, thereby generating history information that is web page 1 - web page 2. The controlling unit 120 manages the history information, and when a panning input is received, determines a web-browsing command corresponding to the panning input using the history information to enable a user to move to a user's desired web page.

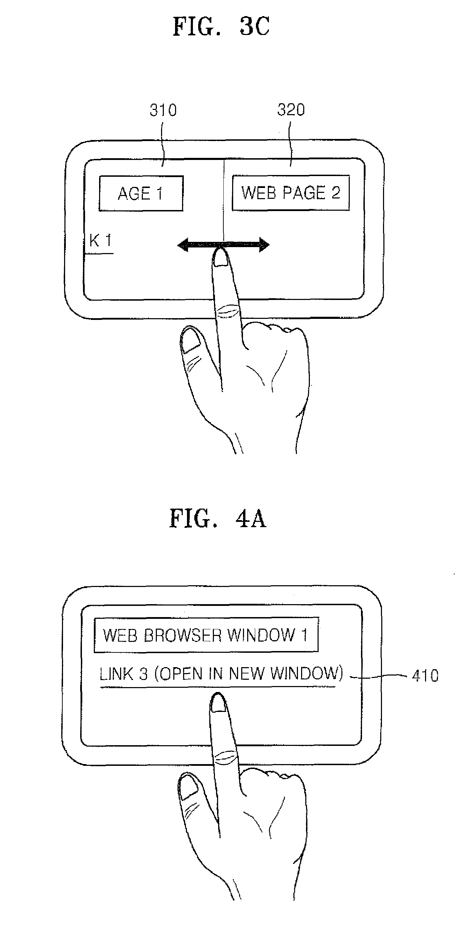

Referring to FIG. 3C, a user performs a left-right panning operation to access the history. When the user performs panning leftwards, the web page 1 310, which is the previous page in the history, is displayed. At a state where the web page displayed on the screen is moved to the web page 1 310, when the user performs panning rightwards, the web page displayed on the screen may be moved to the web page 2 320 which is the next page in the history.

FIGS. 4A through 4C are views illustrating screens displaying web browsing operations for accessing another window or tab through an up-down panning, according to an exemplary embodiment.

While a user is web-browsing, a plurality of web browser windows may be loaded, for example, when a script code, such as "window.open (uniform resource locator (URL))", is included in a web page and another web page having an address corresponding to the "URL" is displayed on a new window; when a link having a target property set to "_blank" is selected; or when a "new window" is opened using a web browser menu and a user's desired URL is input on the opened new window. Also, a plurality of tabs may be generated when tab browsing is supported. Tap browsing is performed by generating a plurality of tabs in one window and using the tabs.

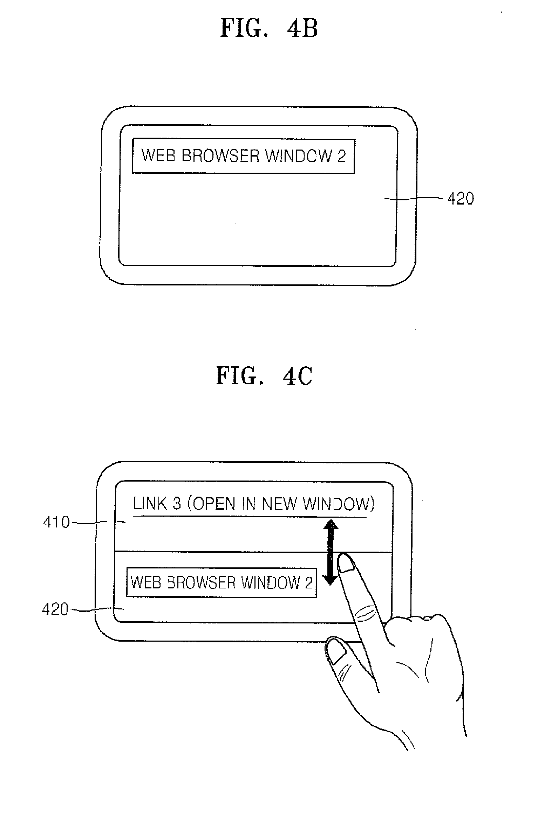

Referring to FIGS. 4A and 4B, a user selects in a web browser window 1 410 a link 3 having a target property that is set to "_blank", and as a result, a new web browser window 2 420 is generated and displayed. Referring to FIG. 4C, a user performs an up-down panning operation for moving between the web browser windows 410 and 420. When the user performs panning upward, the window is moved or scrolled to the previously loaded window to display the web browser window 1 410. Also, when the user performs panning downward in the web browser window 1 410, the window is moved or scrolled to the web browser window 2 420 that was loaded next to the web browser window 1 410.

Although FIGS. 4A through 4C show movement between the windows, movement between tabs is similar to that between the windows. When an up-down panning input is received, the tab is moved to a previously or later generated tab from a tab including a web page currently being displayed to allow a user to access a web page that was displayed in a different tab.

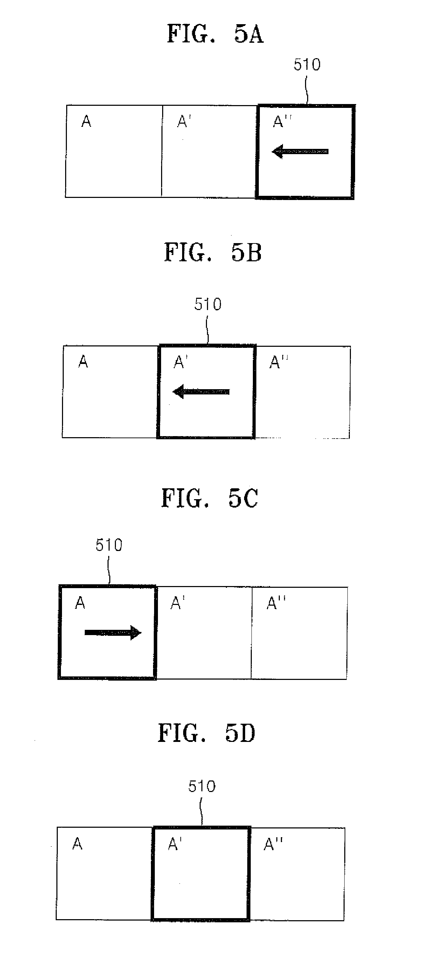

FIGS. 5A through 5D are views illustrating screens displaying web browsing operations for accessing a history through a left-right panning, according to another exemplary embodiment.

Referring to FIG. 5A, a user executes a web browser and opens a web page A, selects a link in the web page A and accesses a web page A' in the same window, then selects a link in the web page A' and accesses a web page A", and thus the web page A" is finally displayed on a screen 510. When the user performs panning leftwards on the screen 510 on which the web page A" of FIG. 5A is being displayed, the window is moved to the web page A', thus the screen 510 shows that a "back" command has been performed as shown in FIG. 5B. When the user performs panning leftwards again on the screen 510 on which the web page A' of FIG. 5B is being displayed, the window is moved to the web page A, thus the screen 510 shows that a "back" command has been performed again as shown in FIG. 5C. When the user performs panning rightwards on the screen 510 on which the web page A of FIG. 5C is being displayed, the window is moved to the web page A', thus it shows that a "next" command has been performed as shown in FIG. 5D.

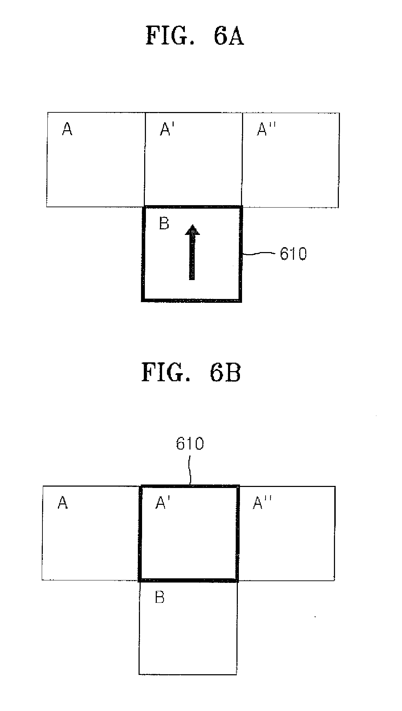

FIGS. 6A and 6B are views illustrating a web browsing operation performed both with a left-right panning and an up-down panning, according to another exemplary embodiment. A web browsing history on the same window is shown in a horizontal direction, and a history about generating windows or tabs is shown in a vertical direction.

Referring to FIG. 6A, a user accesses web pages A, A', and A" successively, moves again to the web page A' through a leftward panning. In this state, the user opens a new window to access a web page B. Thus, in FIG. 6A, the web page B is displayed on a screen 610.

When the user performs panning upward on the screen 610 displaying the web page B of FIG. 6A, the window is moved again to the previously generated window. As a result, the previous window is displayed on the screen 610, and thus the web page A' that was being accessed before the point of time when the new window for the web page B was opened is displayed as shown in FIG. 6B.

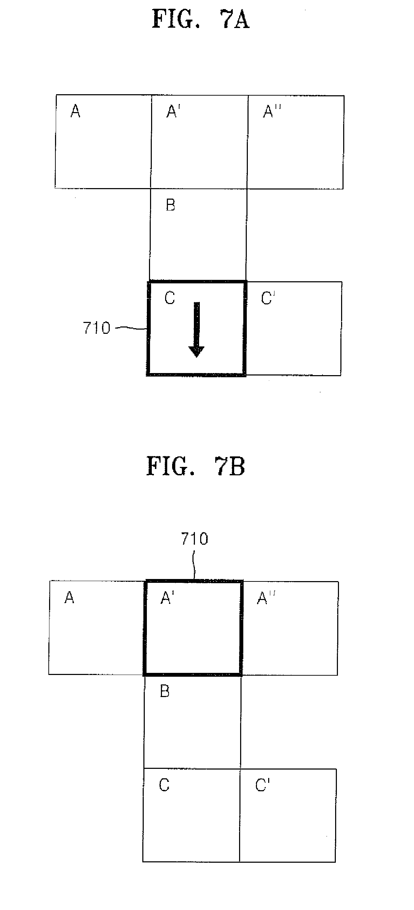

FIGS. 7A and 7B are views illustrating a web browsing operation performed using a method of circular tab browsing or circular web browser window browsing, according to another exemplary embodiment

Referring to FIG. 7A, a first tab in which web pages A, A', and A" are sequentially displayed, a second tab in which a web page B is displayed, and a third tab in which web pages C and C' are sequentially displayed are loaded, and the third tab is activated and displayed on a screen 710. When a panning input is performed downwards on the screen 710 of FIG. 7A, the next tab has to be displayed, but the third tab is the finally generated tab, thus the next tab does not exist. In this instance, as illustrated in FIG. 7B, the window is moved to the first tab that is the first generated tab, and thus the web page A' is displayed on the screen 710. Similarly, when a panning input is performed upwards in the state shown in FIG. 7B, the previous tab has to be displayed, but the first tab is the first generated tab, thus the previous tab does not exist. In this instance, as illustrated in FIG. 7A, the window is moved to the third tab that is the finally generated tab, and thus the web page C is displayed on the screen 710.

The case where a plurality of web browser windows are generated is similar to the case above. For example, a window 1, a window 2, a window 3, and a window 4 are sequentially generated, and when a downward panning is performed in the window 4, a display window is moved to the window 1, and when an upward panning is performed in the window 1, a display window is moved to the window 4.

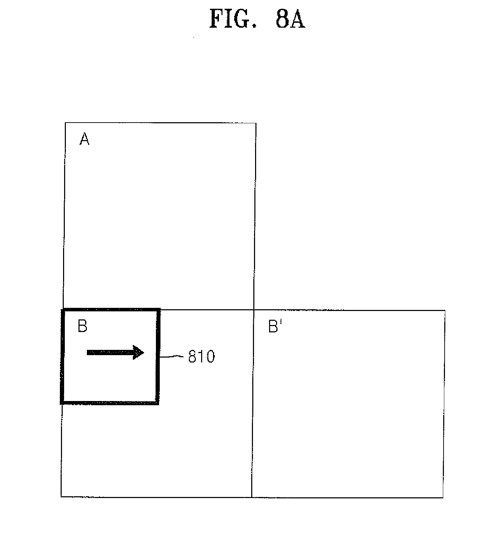

FIGS. 8A through 8C are views illustrating a web browsing operation in a zoom-in mode, according to another exemplary embodiment.

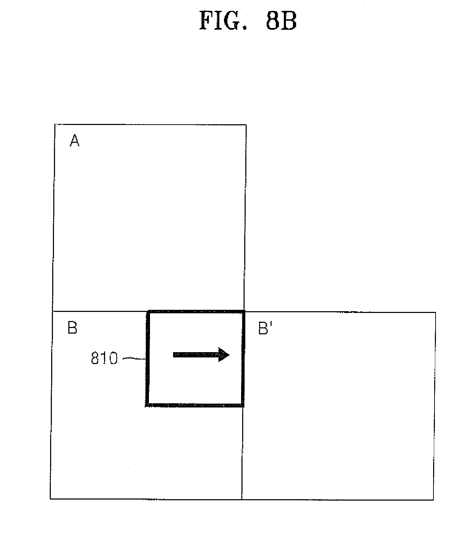

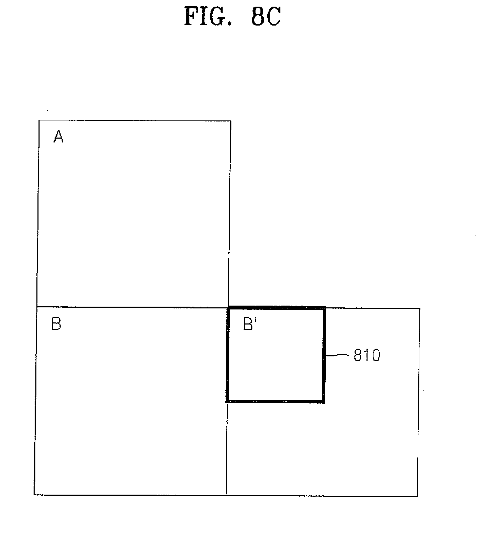

Referring to FIG. 8A, a new window is opened from a web page A, and web pages B and B' are sequentially browsed in the new window, then the window is moved to the web page B. The web page B is browsed in a zoom-in mode that enlarges a web page, thus only a part of the web page B is displayed on a screen 810. In this state, there may be two ways to move to the next web page B'. First, a displayed part is moved to a right end part of the web page B through a rightward panning operation as illustrated in FIG. 8B, and then moved to a left end part of the web page B' using a rightward panning operation as illustrated in FIG. 8C. Second, a flick operation is once performed rightwards on the web page B to move to the same location of the web page B', which is the next web page.

Although FIGS. 8A through 8C show the rightward panning and flick operations, different directions of panning and flick input may be performed in a similar manner to the above case. For example, as illustrated in FIG. 8A, in the state where an upper end part of the web page B is enlarged and displayed on the screen 810, when a user inputs an upward panning, the window is moved to a window including the web page A, and thus a lower end part of the web page A will be displayed on the screen 810. Also, in the state where an upper end part of the web page A is displayed on the screen 810, when a user inputs a downward panning once, the window will be moved to a lower part of the same web page A, and then when the user inputs a downward panning, the window will be moved to the web page B of the next window.

According to the exemplary embodiments, a web history may be conveniently used without displaying an additional menu on a screen, and movement among a plurality of web browser windows or a plurality of tabs may be easily performed.

Also, the method can be embodied as computer readable codes stored on a computer readable recording medium. The computer readable recording medium is any non-transitory data storage device that can store data which can be thereafter read by a computer system. Examples of the computer readable recording medium include read-only memory (ROM), random-access memory (RAM), CD_ROMs, magnetic tapes, floppy disks, optical data storage devices, and etc. The computer readable recording medium can also be distributed over network coupled computer systems so that the computer readable code is stored and executed in a distributed fashion.

While exemplary embodiments been particularly shown and described, it will be readily understood by one of ordinary skill in the art that various changes in form and details may be made therein without departing from the spirit and scope of the inventive concept as defined by the following claims.

## Claims

1. A web browsing method in a device employing a touch input method, the web browsing method comprising:
receiving a panning input on a screen on which a first web page is being displayed; and
displaying on the screen a second web page determined according to a type of the received panning input.

2. The web browsing method of claim 1, wherein the displaying of the second web page comprises, when the panning input is a leftward or rightward panning, displaying on the screen a previous web page or a next web page of the first web page in a browsing history.

3. The web browsing method of claim 1, wherein the displaying of the second web page comprises, when the panning input is an upward or downward panning, displaying on the screen a window comprising the second web page, instead of a window comprising the first web page, on the screen.

4. The web browsing method of claim 3, wherein the displaying of the window comprising the second web page comprises:
when the window comprising the first web page is a first generated window and when the panning input is the upward panning, displaying a finally generated window; and
when the window comprising the first web page is a finally generated window and when the panning input is the downward panning, displaying the first generated window.

5. The web browsing method of claim 1, wherein the displaying of the second web page comprises, when the panning input is an upward or downward panning, displaying a tab comprising the second web page instead of a tab comprising the first web page.

6. The web browsing method of claim 1, wherein the displaying the second web page comprises:
when the panning input is a leftward or rightward panning, displaying the second web page that was displayed on the current window or in the current tab at a different time from the first web page; and
when the panning input is an upward or downward panning, displaying the second web page comprised in a different window or tab from the first web page.

7. The web browsing method of claim 1, wherein the displaying of the second web page comprises, when web browsing is performed in a zoom-in mode, displaying the second web page when the window is moved up to an end part of the first web page by the panning input and an additional panning input is received in a direction of the end part of the first web page.

8. A computer-readable recording medium having embodied thereon a program for executing a web browsing method in a device employing a touch input method of claims 1 through 7.

9. A web browsing device employing a touch input method, the device comprising a controlling unit for displaying a second web page determined according to a type of a panning input received on a screen on which a first web page is displayed.

10. The web browsing device of claim 9, wherein the controlling unit determines a previous web page or a next web page of the first web page as the second web page in a browsing history when the panning input is a leftward or rightward panning type.

11. The web browsing device of claim 9, wherein the controlling unit displays a window comprising the second web page instead of a window comprising the first web page on the screen when the panning input is an upward or downward panning.

12. The web browsing device of claim 11, wherein the controlling unit displays a finally generated window when the window comprising the first web page is a first generated window and the panning input is the upward panning, and displays a first generated window when the window comprising the first web page is a finally generated window and the panning input is the downward panning.

13. The web browsing device of claim 9, wherein the controlling unit displays a tab comprising the second web page instead of a tab comprising the first web page when the panning input is an upward or downward panning.

14. The web browsing device of claim 9, wherein the controlling unit displays the second web page that was displayed on the current window or in the current tab at a different time from the first web page when the panning input is a leftward or rightward panning, and displays the second web page comprised in a different window or tab from the first web page when the panning input is an upward or downward panning.

15. The web browsing device of claim 9, wherein, when web browsing is performed in a zoom-in mode, the controlling unit displays the second web page, when the screen is moved up to an end part of the first web page by the panning input and an additional panning input is received in a direction of the end part.
